# EUROPÄISCHE PATENTANMELDUNG

(11) **EP 4 186 627 A1**
(43) Veröffentlichungstag der Anmeldung: **31.05.2023**
(21) Anmeldenummer: 22206346.3
(22) Anmeldetag: 09.11.2022
(51) Int. Cl.: B23K 9/16, B23K 37/00

(54) **VERFAHREN ZUR REDUZIERUNG DES VERZUGS BEIM SCHWEISSEN UND SCHNEIDEN VON METALLEN**

(30) Priorität: 25.11.2021 DE 102021005854
(71) Anmelder: Messer SE & Co. KGaA, 65812 Bad Soden (DE)
(72) Erfinder: Hildebrandt, Dr. Bernd, 47918 Tönisvorst (DE); Wankum, Achim, 47809 Krefeld (DE)
(74) Vertreter: Münzel, Joachim R.

(57) **Zusammenfassung**

Zur Reduzierung des Verzugs beim Schweißen oder Schneiden eines metallischen Werkstücks mit Lichtbogen unter Schutzgas wird erfindungsgemäß vorgeschlagen, dem Schweiß- oder Schneidprozess einen Kühlprozess nachlaufen zu lassen. Der Kühlprozess besteht in der direkten Beaufschlagung des Werkstücks mit einem kroygenen Kühlmedium, beispielsweise gasförmiger oder flüssiger Stickstoff oder Kohlendioxidschnee. Das Verfahren ist insbesondere zur Reduktion des Schweißverzugs bei Leichtmetallen sowie bei höherfesten, hochfesten oder hochlegierten Stählen geeignet.

## Beschreibung

Die Erfindung betrifft ein Verfahren zur Reduzierung des Verzugs beim Schweißen oder Schneiden eines metallischen Werkstücks mittels Lichtbogen unter Schutzgas, bei dem ein Arbeitsbereich des Werkstücks in einem Schweiß- oder Schneidprozess durch Einwirken eines Lichtbogens behandelt und anschließend gekühlt wird.

Ein großes Problem beim Schweißen oder Schneiden von Metallen unter Einsatz eines Lichtbogens sind die aufgrund der thermischen Einwirkung entstehenden Eigenspannungen. Durch eine inhomogene Temperaturverteilung bei der Wärmeeinwirkung werden plastische Verformungen hervorgerufen, die nach dem Erkalten Spannungen und dauerhafte Verformungen, den sogenannten Schweißverzug, hinterlassen, der leicht zu Maßabweichungen bis zu einigen Millimetern führen kann. Funktion des Bauteils und Fertigung können dadurch negativ beeinflusst werden. Dies kommt insbesondere beim Schweißen von Leichtmetallen, wie Aluminium, oder von höherfesten, hochfesten oder hochlegierten Stählen zum Tragen, da diese Materialien aufgrund ihrer vergleichsweise niedrigen thermischen Leitfähigkeit besonders für Schweißverzug anfällig sind. Gleichzeitig gewinnen diese Werkstoffe aufgrund des Trends zu Leichtbau, z.B. im Automobilbau, zunehmend an wirtschaftlicher Bedeutung.

Bekannt ist, fertigungstechnische Maßnahmen vor, während und nach dem Schweißen zu ergreifen, um die geforderten Bauteileigenschaften zu erreichen, wie beispielsweise eine bestimmte Art der Konstruktion, bestimmte Schweißparameter, und/oder eine Nachbehandlung durch Flammrichten, Fugenhobeln und dergleichen. Derartige Maßnahmen sind jedoch nur in begrenztem Umfang wirksam, können die Fertigung erheblich verteuern und beruhen nahezu ausschließlich auf individuellen praktischen Erfahrungen des jeweiligen Herstellers.

Um die thermische Belastung des Werkstücks möglichst gering zu halten, wurde bereits vorgeschlagen, das Werkstück während der Behandlung zu kühlen. So wird in der DE 40 10 077 A1 ein Verfahren zum kontinuierlichen Verschweißen von Bändern mit einem Laserstrahl vorgeschlagen, bei dem die Bänder im Bereich der Schweißnaht in Bandlaufrichtung unmittelbar hinter dem Schweißfokus gekühlt werden, wobei als Kühlmittel Luft vorgeschlagen wird. Derartige Luftkühlungen sind jedoch wenig effektiv und bedürfen großer Gasmengen, um eine befriedigende Kühlleistung zu erreichen. Der damit verbundene apparative Aufwand für das Einblasen ist zudem beträchtlich und erhöht die Störanfälligkeit der Anlage.

Aus der EP 2 014 401 A1 ist bekannt, einer Schweißdüse eine Reinigungsdüse vorlaufen zu lassen, aus der ein kryogenes Medium auf der Oberfläche des Werkstücks abgestrahlt wird. Der dort beschriebene Gegenstand dient insbesondere dazu, das Werkstück von Rückständen von Ziehmitteln zu befreien, die zuvor auf das Werkstück aufgetragen worden waren. Jedoch ist es mit diesem Gegenstand nicht möglich, einen sich im Anschluss an die Schweißung ergebenden Schweißverzug zu reduzieren.

In der DE 195 37 924 A1 wird vorgeschlagen, beim Laserschweißen von Blechen oder Bändern den Arbeitsbereich in einem Kühlprozess zu kühlen, um einer durch die hohe Energiedichte des Laserstrahls hervorgerufenen Spaltbildung entgegenzuwirken. Zur Kühlung kommt ein flüssiges Kühlmittel, insbesondere Wasser, Öl oder ein Öl-Wasser-Gemisch zum Einsatz. Um zu verhindern, dass die Kühlflüssigkeit in den Schweißfokus hineinläuft, wird dieser mit einem Gasvorhang aus einem Inertgas, wie Helium oder Argon, abgeschirmt. Das Laserschweißen ist aber aufgrund des punktgenauen Energieeintrags eine Technologie, bei der nur ein vergleichsweise geringer Verzug auftritt. In Bezug auf die Vermeidung eines sich ergebenden Schweißverzugs beim Lichtbogenschweißen kann diese Druckschrift daher keine Hinweise geben.

Aus der WO 2018/134490 A1 ist bekannt, einem Schweißbrenner zum Verhindern des Schweißverzugs eine Kühlapparatur nachzuführen. Die Kühlapparatur besteht aus einem walzenförmigen Mineralfaserkissen, das von einer Kühlflüssigkeit durchtränkt wird. Diese Einrichtung ist allerdings aufwändig im Aufbau und im Betrieb aufgrund ihres komplizierten Aufbaus störanfällig.

Die GB 2 383 285 A beschreibt eine Schweißapparatur, bei dem einem Schweißbrenner eine Kühlanordnung in Form eines festen, aus Trockeneis bestehenden Kühlblocks nachgeführt wird. Der Trockeneisblock hat die Aufgabe, die Oberfläche des Werkstücks zu kühlen, um Schweißverzug zu verhindern. Nachteilig bei diesem Gegenstand ist jedoch, dass der Wärmeübergang zwischen dem Trockeneisblock und dem zu kühlenden Werkstück nicht sicher gewährleistet werden kann, da sich durch Verdampfen des Kohlendioxids eine isolierende Gasschicht zwischen beiden Medien ausbildet, die die Effizienz der Kühlung insbesondere bei hohen Schweißgeschwindigkeiten erheblich reduziert.

Aufgabe der vorliegenden Erfindung ist daher, ein Verfahren zum Reduzieren des Verzugs beim Schutzgasschweißen oder -schneiden unter Einsatz eines Lichtbogens anzugeben, das die Nachteile des Standes der Technik überwindet.

Gelöst ist diese Aufgabe durch ein Verfahren mit den Merkmalen des Patentanspruchs 1. Vorteilhafte Ausgestaltungen der Erfindung sind in den Unteransprüchen angegeben.

Ein Verfahren zur Reduzierung des Verzugs beim Schweißen oder Schneiden eines metallischen Werkstücks mit Lichtbogen unter Schutzgas, insbesondere eines WIG-, MIG- oder MAG- oder Plasma-Schweißverfahrens oder eines Plasmaschneidverfahrens, bei dem ein Arbeitsbereich des Werkstücks in einem Schweiß- oder Schneidprozess durch Einwirken eines Lichtbogens behandelt und anschließend gekühlt wird, ist erfindungsgemäß also dadurch gekennzeichnet, dass die Kühlung des Arbeitsbereiches in einem dem Schweiß- oder Schneidprozess nachlaufenden Kühlprozess durch direktes Beaufschlagen des Werkstücks mit einem Kühlmedium erfolgt.

Als Schutzgas kommt in an sich bekannter Weise ein Gas oder Gasgemisch zum Einsatz, das abhängig von der chemischen Zusammensetzung des zu bearbeitenden Werkstücks gewählt wird. Beispielsweise eignet sich als Schutzgas bei der Bearbeitung hochlegierter Stähle Argon oder ein Argon-Wasserstoff-Gemisch, beim Bearbeiten von Aluminium ein überwiegend aus Argon und/oder Helium bestehendes Schutzgasgemisch und bei der Bearbeitung hochfester Stähle (Feinkornbaustähle) reines Argon oder ein argonreiches Mischgas mit Aktivgas-Komponenten aus Kohlendioxid und/oder Sauerstoff.

Das Kühlmedium kommt ergänzend zum Schutzgas zum Einsatz und wird bevorzugt aufgrund seiner Wärmekapazität und/oder Temperatur ausgewählt. Schutzgas und Kühlmedium weisen daher in der Regel verschiedene Zusammensetzungen auf. Das Kühlmedium wird dem Schweiß- oder Schneidprozess nachlaufend, zeitlich also nach der Bearbeitung mit dem Lichtbogen, jedoch möglichst rasch, beispielsweise zwischen 0,1s und 1,0s auf diesen folgend, auf den Arbeitsbereich aufgetragen. Das Kühlmedium wird aus einer Düse oder aus einer eine Mehrzahl von Düsen aufweisenden Anordnung direkt auf die Oberfläche des Werkstücks aufgetragen. Dabei wird bevorzugt ein eng bemessener Oberflächenbereich von beispielsweise zwischen 10 cm² und 100 cm² um die vom Lichtbogen beeinflusste Zone (z.B. Schweißnaht) mit Kühlmedium beaufschlagt. Durch die rasche Kühlung dieses vergleichsweise eng bemessenen Bereiches wird einer lokalen Überhitzung des Werkstücks infolge des Energieeintrags durch das Schweiß- oder Schneidwerkzeug entgegengewirkt und der Fügezustand noch vor der Umsetzung des Verzugs eingefroren. Die schlagartige Kühlung hemmt somit das Kornwachstum im Gefüge, ohne dass jedoch das Werkstück insgesamt eine zu rasche Durchkühlung erfährt.

Das Kühlmedium wird bevorzugt auf die gleiche Oberflächenseite des Werkstücks aufgetragen, auf die auch der Lichtbogen einwirkt (hier "Oberseite" oder "Schweißseite" genannt). Alternativ dazu kann das Kühlmedium jedoch auch auf eine der Schweißseite entgegengesetzte Unterseite des Werkstücks, oder aber gleichzeitig auf Ober- und Unterseite aufgetragen werden.

Als bevorzugtes Kühlmedium kommt beispielsweise ein kaltes Gas, wie Kohlendioxid, Stickstoff, Argon, Helium oder Wasserstoff oder Mischungen aus mehreren dieser Gase mit einer Temperatur von bevorzugt zwischen 0°C und -196°C, besonders bevorzugt zwischen -50°C und -196°C zum Einsatz. Alternativ oder ergänzend dazu kommt als Kühlmedium ein granuläres, pulverförmiges oder flüssiges kryogenes Medium zum Einsatz, wie beispielsweise Trockeneisschnee, flüssiger Stickstoff oder flüssiges Argon.

Die Erfindung kommt in vorteilhafter Weise zur Behandlung eines metallischen Werkstücks zum Einsatz, das aus einem Material mit schlechter Wärmeleitung besteht. Beispielsweise handelt es sich dabei um ein Leichtmetall, wie insbesondere Aluminium, oder um einen höherfesten, hochfesten oder hochlegierten Stahl.

Um zu verhindern, dass das Werkstück durch den Kühlprozess zu stark oder zu schnell unterkühlt wird, sieht eine vorteilhafte Ausgestaltung der Erfindung vor, dass mittels eines geeigneten, beispielsweise die Infrarotstrahlung eines Bereiches auf der Werkstückoberfläche erfassenden, Temperatursensors eine Temperatur im Arbeitsbereich laufend erfasst und zur Regelung der Menge an zugeführtem Kühlmedium eingesetzt wird.

Das Kühlmedium wird im Anschluss an die Beaufschlagung der Oberfläche des Werkstücks bevorzugt mit Hilfe einer Absaugeinrichtung entfernt, um eine kontrollierte Abkühlung zu gewährleisten, eine Vermischung des Kühlmediums mit dem Schutzgas zu verhindern und eine Belastung der Umgebung oder des Schweißers mit dem Kühlmedium zu minimieren.

Das erfindungsgemäße Verfahren kommt beispielsweise im Schiffs-, Karosserie-, Behälter- oder Turbinenbau zum Einsatz.

Eine Vorrichtung zur Durchführung des erfindungsgemäßen Verfahrens ist zumindest mit einem Bearbeitungswerkzeug zum Schweißen oder Schneiden mittels Lichtbogen, beispielsweise einem Schweißbrenner zum MIG, MAG oder WIG-Schweißen, und mit wenigstens einer - in der bestimmungsgemäßen Vorschubrichtung des Bearbeitungswerkzeugs gesehen - nachlaufend angeordneten Zuführdüse für ein Kühlmedium ausgestattet. Weiterhin kann eine solche Vorrichtung eine Absaugeinrichtung zum Entfernen von erwärmtem Kühlmedium aus dem Arbeitsbereich und/oder eine mit einem Temperatursensor in Wirkverbindung stehende, vorzugsweise elektronische Steuereinheit zum Regeln der Zufuhr von Kühlmedium in Abhängigkeit von einer im oder hinter dem Arbeitsbereich (in Vorschubrichtung des Bearbeitungswerkzeugs gesehen) gemessenen Temperatur aufweisen. Die Zuführdüse für das Kühlmedium sollte gegenüber dem Schweiß- oder Schneidwerkzeug so angeordnet sein, die die Bedeckung des Arbeitsbereiches mit Schutzgas während des Schweiß- oder Schneidprozesses nicht beeinträchtigt wird, beispielsweise kann sie in Richtung entgegen der Vorschubrichtung abgewinkelt oder beabstandet vom Bearbeitungswerkzeug angeordnet sein.

Zweckmäßigerweise ist die Zuführdüse oder eine Mehrzahl von Zuführdüsen auf der gleichen Seite des Werkstücks wie das Bearbeitungswerkzeug angeordnet und trägt das Kühlmedium somit auf die gleiche Werkstoffoberfläche (Schweißseite) auf, auf die auch der Lichtbogen des Bearbeitungswerkzeugs einwirkt. Ebenso ist vorstellbar, dass die Zuführdüse oder eine Mehrzahl von Zuführdüsen auf einer zum Bearbeitungswerkzeug entgegengesetzten Seite des Werkstücks angeordnet ist und eine der Schweißseite gegenüberliegende Unterseite des Werkstücks mit Kühlgas beaufschlagt. In einer weiteren Alternative können auf beiden gegenüberliegenden Seiten des Werkstücks jeweils eine oder mehrere Kühldüsen angeordnet sein.

Anhand der Zeichnungen soll ein Ausführungsbeispiel der Erfindung näher erläutert werden. In schematischen Ansichten zeigen:
Fig. 1: Eine Vorrichtung zur Durchführung des erfindungsgemäßen Verfahrens in einer seitlichen Schnittansicht,
Fig. 2: Die Bearbeitung eines Werkstücks mittels einer Vorrichtung zur Durchführung des erfindungsgemäßen Verfahrens in einer Ansicht von oben.

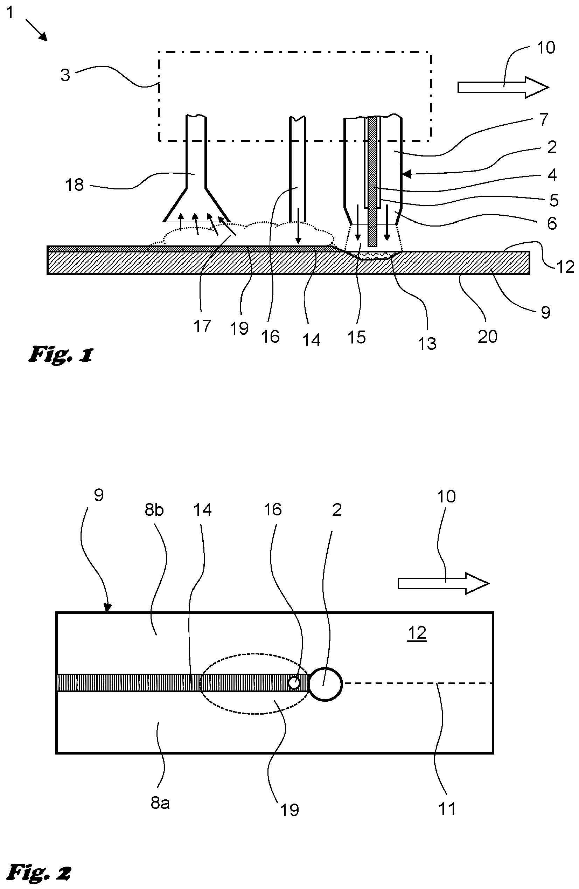

Die in Fig. 1 gezeigte Vorrichtung 1 weist ein Lichtbogen-Bearbeitungswerkzeug, im hier gezeigten Ausführungsbeispiel ein Schweißbrenner 2 für das Metall-Schutzgasschweißen (MSG) auf, der an einem hier nur angedeuteten Gehäuse 3 montiert ist, bei dem es sich beispielsweise um ein Handgerät oder eine automatische Vorschubeinrichtung handeln kann. Von dem in üblicher Weise aufgebauten Schweißbrenner 2 ist hier in sehr vereinfachter Darstellung nur Drahtelektrode 4, Kontaktrohr 5 und eine koaxial um das Kontaktrohr 5 verlaufende, an einer Schutzgasdüse 6 ausmündenden Schutzgaszuführung 7 gezeigt. Im Übrigen kann anstelle eines MSG-Schweißbrenners 2 auch eine andere Lichtbogen-Bearbeitungseinrichtung zum Einsatz kommen, beispielsweise eine Plasma-Schneidmaschine.

Der Schweißbrenner 2 dient in gleichfalls an sich bekannter Weise zum Verbinden zweier Teile 8a, 8b eines metallischen, beispielsweise aus hochfestem Stahl bestehenden Werkstücks 9, indem er, nach Erzeugung eines hier nicht gezeigten Lichtbogens zwischen Drahtelektrode 4 und den Teilen 8a, 8b, in Vorschubrichtung 10 entlang einer Fügelinie 11 bewegt wird. Der Lichtbogen wirkt dabei auf die dem Schweißbrenner 2 zugewandte Oberseite 12 des Werkstücks 9 ein. Dabei wird in einem Arbeitsbereich 13 des Werkstücks 9 ein Teil des Materials aufgeschmolzen, welches wiederum nach seiner Erstarrung unter Ausbildung einer Schweißraupe 14 eine feste Verbindung zwischen den Teilen 8a, 8b des Werkstücks 9 herstellt. Um die Drahtelektrode 4 und den Arbeitsbereich 13 vor dem Einfluss der Umgebungsatmosphäre zu schützen, wird mittels der Schutzgasdüse 6 ein Schutzgas, beispielsweise Argon, herangeführt, das während des Schweißprozesses rings um den Arbeitsbereich 13 eine aus dem betreffenden Schutzgas bestehende Atmosphäre 15 ausbildet.

Dem Schweißbrenner 2 nachfolgend, also am Gehäuse 3 - von der bestimmungsgemäßen Vorschubrichtung 10 aus gesehen - hinter dem Schweißbrenner 2, ist eine Zuführdüse 16 angeordnet, die in der unten näher beschriebenen Weise zur Zuführung eines Kühlmediums 17 dient. Wiederum von der bestimmungsgemäßen Vorschubrichtung 10 aus gesehen hinter der Zuführung 16 ist die Vorrichtung 1 mit einer Absaugeinrichtung 18 ausgerüstet.

Im Betrieb der Vorrichtung 1 werden die Teile 8a, 8b des Werkstücks 9 in der oben beschriebenen Weise mit Hilfe des Schweißbrenners 2 zusammengefügt. Mit der Abkühlung und Verfestigung des aufgeschmolzenen Materials setzt im Werkstück 9 aufgrund der unterschiedlichen Wärmebelastungen des Materials in und um den Arbeitsbereich 13 ein sehr inhomogenes Kornwachstum ein, das in der Folge die Entstehung innerer Spannungen und damit die Ausbildung von Verzug begünstigen würde.

Um dem entgegenzuwirken, wird - dem Schweißprozess nachfolgend - die Oberfläche des Werkstücks 9 mit einem gasförmigen, flüssigen oder granularen Kühlmedium 16 beaufschlagt, und zwar in einem Bereich 19, der den zuvor vom Schweißbrenner 2 behandelten Arbeitsbereich 13 überdeckt. Beim Kühlmedium 17 handelt es sich beispielsweise um kalten gasförmigen oder flüssigen Stickstoff oder um Kohlendioxidschnee. Durch die direkte Beaufschlagung des Bereiches 19 mit dem Kühlmedium wird das Kornwachstum in dem sich verfestigenden Material des verfügten Werkstücks 9 gehemmt und somit die Entstehung von Schweißverzug zumindest reduziert.

Im hier gezeigten Ausführungsbeispiel erfolgt die Beaufschlagung mit dem Kühlmedium 17 auf die Oberseite 12 des Werkstücks 9, d.h. auf die gleiche Seite des Werkstücks 9, auf die auch die Einwirkung des Lichtbogens erfolgt. Es ist im Rahmen der Erfindung jedoch auch denkbar, dass das Kühlmedium 17 auf die von der Oberseite 12 entgegengesetzte Unterseite 20 oder auf beide, Oberseite 12 und Unterseite 20, gleichzeitig aufgetragen wird.

Das durch den Wärmekontakt mit der Oberfläche des Werkstücks 9 erwärmte Kühlmedium wird im hier gezeigten Ausführungsbeispiel mittels der Absaugeinrichtung 18 aus dem Bereich 19 abgesaugt und in die Umgebungsatmosphäre entlassen oder einer anderweitigen Verwendung zugeführt.

Im Übrigen ist es im Rahmen der Erfindung auch möglich, die Zuführung an Kühlmedium über die Zuführdüse 16 in Abhängigkeit von einer beispielsweise im Bereich 19 oder - in Vorschubrichtung 10 gesehen - hinter diesem auf der Oberfläche des Werkstücks 9 gemessenen Temperatur zu regeln. Dazu ist ein hier nicht gezeigter Temperatursensor vorgesehen, der die entsprechende Temperatur kontinuierlich erfasst und einer hier gleichfalls nicht gezeigten Steuereinheit übermittelt, die wiederum durch laufenden Abgleich der gemessenen Temperatur mit einer vorgegebenen Zieltemperatur die Zuführung von Kühlmedium über die Zuführdüse 16 nach einem vorgegebenen Programm steuert.

### Bezugszeichenliste

- 1: Vorrichtung
- 2: Schweißbrenner
- 3: Gehäuse
- 4: Drahtelektrode
- 5: Kontaktrohr
- 6: Schutzgasdüse
- 7: Schutzgaszuführung
- 8a, 8b: Teile (des Werkstücks 9)
- 9: Werkstück
- 10: Vorschubrichtung
- 11: Fügelinie
- 12: Oberseite
- 13: Arbeitsbereich
- 14: Schweißraupe
- 15: Atmosphäre
- 16: Zuführdüse (für Kühlmedium)
- 17: Kühlmedium
- 18: Absaugeinrichtung
- 19: Bereich
- 20: Unterseite

## Patentansprüche

1. Verfahren zur Reduzierung des Verzugs beim Schweißen oder Schneiden eines metallischen Werkstücks (9) mittels Lichtbogen unter Schutzgas, bei dem ein Arbeitsbereich (13) des Werkstücks (9) in einem Schweiß- oder Schneidprozess durch Einwirken eines Lichtbogens behandelt und anschließend gekühlt wird, **dadurch gekennzeichnet,**
**dass** die Kühlung des Arbeitsbereiches (13) in einem dem Schweiß- oder Schneidprozess nachlaufenden Kühlprozess durch direktes Beaufschlagen des Werkstücks (9) mit einem Kühlmedium (17) erfolgt.

2. Verfahren nach Anspruch 1, **dadurch gekennzeichnet, dass** der Lichtbogen auf eine Oberseite (12) des Werkstücks (9) einwirkt und die Beaufschlagung des Werkstücks (9) mit dem Kühlmedium (17) auf die Oberseite (12) und/oder auf eine der Oberseite (12) entgegengesetzte Unterseite (20) des Werkstücks (9) erfolgt.

3. Verfahren nach Anspruch 1 oder 2, **dadurch gekennzeichnet, dass** als Kühlmedium (17) ein kaltes Gas, wie Stickstoff- oder Kohlendioxidgas, zum Einsatz kommt.

4. Verfahren nach einem der vorhergehenden Ansprüche, **dadurch gekennzeichnet, dass** als Kühlmedium (17) ein granuläres, pulverförmiges oder flüssiges kryogenes Medium, wie Trockeneisschnee oder flüssiger Stickstoff, zum Einsatz kommt.

5. Verfahren nach einem der vorhergehenden Ansprüche, dass das Werkstück (9) aus einem Leichtmetall oder aus einem höherfesten, hochfesten oder hochlegierten Stahl besteht.

6. Verfahren nach einem der vorhergehenden Ansprüche, **dadurch gekennzeichnet, dass** eine Temperatur im Arbeitsbereich (13) laufend erfasst und zur Regelung der Menge an zugeführtem Kühlmedium eingesetzt wird.

7. Verfahren nach einem der vorhergehenden Ansprüche, **dadurch gekennzeichnet, dass** das durch den Wärmekontakt mit dem Werkstück (9) erwärmte Kühlmedium (17) nach der Beaufschlagung des Werkstücks (9) abgesaugt wird.

8. Vorrichtung zur Durchführung eines Verfahrens nach einem der vorhergehenden Ansprüche, mit einem Bearbeitungswerkzeug (3) zum Schweißen oder Schneiden von Metallen mittels Lichtbogen und mit einer - in der bestimmungsgemäßen Bearbeitungsrichtung (10) des Bearbeitungswerkzeugs (3) gesehen - nachlaufend angeordneten Zuführdüse (16) für das Kühlmedium (17).
